# FASCICULE DE BREVET EUROPEEN

(11) **EP 2 429 358 B1**
(45) Date de publication et mention de la délivrance du brevet: **05.06.2013**
(21) Numéro de dépôt: 10728749.2
(22) Date de dépôt: 12.05.2010
(51) Int. Cl.: A47J 36/02

(54) **ARTICLE CULINAIRE COMPORTANT UNE BASE DURE EN UN MATÉRIAU CÉRAMIQUE ET/OU MÉTALLIQUE ET/OU POLYMÈRE ET UN REVÊTEMENT ANTIADHÉSIF À BASE DE RÉSINE FLUOROCARBONÉE**
KOCHUTENSIL MIT HARTEM BODEN AUS KERAMIK UND/ODER METALL UND/ODER POLYMERMATERIAL UND ANTIHAFTBESCHICHTUNG MIT EINEM FLUORKOHLENSTOFFHARZ
COOKING UTENSIL COMPRISING A HARD BASE MADE FROM A CERAMIC AND/OR METAL AND/OR POLYMER MATERIAL AND A NONSTICK COATING CONTAINING A FLUOROCARBON RESIN

(30) Priorité: 15.05.2009 FR 0953255
(43) Date de publication de la demande: 21.03.2012
(73) Titulaire: SEB SA, 69130 Ecully (FR)
(72) Inventeur: PERILLON, Jean-Luc, 26130 Saint-Paul-Trois-Châteaux (FR); FONTAINE, Michel, 74150 Sales (FR)
(74) Mandataire: Novagraaf Technologies
(86) Numéro de dépôt international: PCT/FR2010/050924
(87) Numéro de publication internationale: WO 2010/130954

(56) Documents cités:
- FR-A- 2 791 065
- FR-A- 2 923 696
- GB-A- 1 205 268

## Description

La présente invention concerne de manière générale un article culinaire, dont le fond présente une face intérieure renforcée et pourvue d'un revêtement antiadhésif, avec des propriétés élevées de résistance à la rayure et à l'abrasion. La manière de fabriquer l'article culinaire avec sa face intérieure renforcée est également concernée.

L'objectif de la présente invention est de rendre un revêtement antiadhésif d'ustensile culinaire, à base d'une résine fluorée telle que le PTFE, plus résistant à la rayure à l'usure et l'abrasion.

Les articles culinaires comportant un revêtement antiadhésif à base de résine fluorocarbonée (en particulier à base de PTFE) ont classiquement la faveur du marché car ils permettent une cuisson sans (ou quasiment sans) graisses ajoutées tout en étant d'un entretien facile. Toutefois, de tels articles présentent l'inconvénient d'une faible résistance à la rayure. Or, la résistance à la rayure est une propriété difficile à caractériser car elle dépend de plusieurs autres propriétés telles que la dureté intrinsèque du matériau, l'élasticité, la résistance à l'abrasion, et le coefficient de frottement. Comme il est non seulement difficile de mesurer ces propriétés séparément, mais également en combinaison, on se limite généralement dans la pratique, à des tests d'abrasion qui ne traduisent qu'imparfaitement la réalité culinaire et à des tests réels de cuisine.

Pour améliorer la résistance à la rayure des revêtements antiadhésifs à base de résine fluorocarbonée (notamment à base de PTFE), il est connu de l'homme du métier de renforcer le revêtement antiadhésif par des charges dures (notamment primaires renforcés par des charges dures) ou par l'interposition d'une base dure de type inorganique entre le support de l'article culinaire (généralement métallique) et le revêtement antiadhésif.

Les primaires renforcés permettent effectivement des améliorations importantes pour la tenue à l'abrasion. Mais on observe aussi des impacts au métal lors de la cuisson d'aliments tels que des côtes de porc, ou lors de l'utilisation de spatules métalliques.

Les bases dures inorganiques, telles que par exemple celles réalisées à partir d'un émail, permettent d'améliorer encore la résistance à l'abrasion, comme cela est notamment décrit dans la demande de brevet français FR 2 923 696. En outre, le problème des impacts est pratiquement éliminé avec de telles bases. Toutefois, on introduit des fragilités nouvelles, comme par exemple une certaine sensibilité à l'hydrolyse, et la quasi impossibilité de rapporter des fonds par une frappe (pour l'obtention de fonds dits frappés pour des articles compatibles avec un chauffage par induction, constitués d'une calotte en aluminium et d'une grille en acier inoxydable ferritique. La frappe permet l'accrochage de la grille sur la face extérieure du fond de la calotte).

La tenue à l'hydrolyse est requise en raison de la porosité du revêtement antiadhésif à base de résine fluorocarbonée (PTFE), compte tenu de la nécessité d'une bonne résistance au lave-vaisselle. Or, un bon accrochage de la base dure inorganique au support nécessite une part importante de fondants, ce qui nuit à la tenue à l'hydrolyse. L'utilisation d'une base dure présentant de très bonnes propriétés d'adhérence au support (base dure dite « super-adhérente ») se fait donc au détriment de la résistance à l'hydrolyse.

Il s'ensuit que l'utilisation d'une base dure en émail reste typiquement cantonnée au renforcement d'articles déjà en forme, en d'autres termes des articles ne subissant pas de déformation après le dépôt de la base dure. Ainsi, une base dure en émail n'est pas utilisable pour le renforcement d'articles réalisés à partir d'un disque pour lequel la mise en forme se fait après le dépôt du revêtement antiadhésif. Un autre désavantage de cette façon de procéder est le coût énergétique élevé de cette technologie. En effet, la cuisson d'une base dure en émail nécessite un traitement thermique de l'ordre de 560°C pendant plusieurs minutes. Ce traitement ne pose pas de problème lorsque la face extérieure des calottes est revêtue par un émail, car on peut alors simultanément réaliser les cuissons des émaux intérieur (base dure) et extérieur (décoration). Il n'en est pas de même si l'on souhaite revêtir la face extérieure de l'article avec un revêtement à base de PTFE, ce qui est généralement fait avec un seul passage au four. La cuisson de la base dure impose alors un passage supplémentaire, énergétiquement très coûteux par les températures et les durées de cuisson nécessaires.

Par ailleurs, dans le cas d'articles multicouches incorporant au moins une couche en aluminium ou dans le cas d'articles en acier inoxydable incorporant un fond rapporté constitué d'un acier inoxydable ferritique et d'aluminium, la base dure en émail, qui est en contact avec l'acier inoxydable, doit posséder un point de ramollissement élevé supérieur au point de fusion de l'aluminium. Il s'ensuit que l'étuvage (typiquement à une température d'au moins 800°C) de cette base dure conduit à la désolidarisation des différentes parties de l'article. Une base dure en émail n'est donc pas utilisable avec des produits multicouches.

Pour les raisons susmentionnées, les bases dures en émail sont donc loin de constituer une réponse entièrement adaptée.

Enfin, l'homme du métier connaît également les bases dures métalliques ou céramiques appliquées par plasma ou par projection thermique sur un support métallique. Typiquement, on applique au moyen d'un arc électrique, d'une torche à plasma ou encore d'une flamme, une base dure sous forme d'une couche continue qui recouvre la totalité de la surface avant l'enduction du PTFE. Ces bases dures métalliques ou céramiques sont continues et présentent généralement une épaisseur élevée : elles ne peuvent donc être appliqués que pour des articles déjà en forme. En effet, la présence de telles bases épaisses et continues sous le revêtement antiadhésif empêche tout emboutissage ou formage ultérieur des articles, ce qui interdit leur application sur des disques plats. Par ailleurs, comme on cherche à réaliser la surface la plus lisse possible pour ne pas perturber l'adhésion et les propriétés antiadhésives du revêtement, il s'ensuit que l'application de telles bases nécessite des temps de mise en oeuvre élevés et une succession d'outils et de couches pour créer cette surface lisse.

Enfin, la présence d'une couche céramique sur la totalité de l'article crée également des problèmes lors de la finition de l'article, en particulier l'opération de rognage est renchérie par la nécessité d'outils spéciaux et une moindre productivité.

Ces bases continues céramiques et/ou métalliques présentent donc aussi des désavantages.

La présente invention a donc pour objet un article culinaire et un procédé de fabrication d'un tel article qui remédient aux inconvénients de l'art antérieur par la formation, entre la surface intérieure de l'article et le revêtement antiadhésif, d'une base dure en un matériau céramique et/ou métallique et/ou polymère, qui est au moins partiellement discontinue au niveau des zones fragiles de l'article.

Par zone fragile d'un article culinaire, on entend, au sens de la présente invention, toute partie de l'article qui a été affectée mécaniquement ou thermiquement lors de la mise en oeuvre du support initial, généralement sous forme de disque ou de calotte (notamment par pliage, emboutissage, étirage, soudage ou rognage).

Une zone fragile particulièrement sensible d'un article culinaire est la zone de jonction entre le fond de la calotte et la paroi latérale car c'est la partie du disque qui est déformée (généralement emboutie) pour créer la paroi latérale.

Une autre zone fragile d'un article culinaire est le bord supérieur qui est rogné (rectifié) pour donner un bord lisse et plan.

On peut également citer à titre de zone fragile celle qui vient supporter l'accroche de la poignée car elle peut subir une déformation consécutive au soudage de l'élément de fixation.

Plus particulièrement, la présente invention a pour objet un article culinaire comprenant une calotte creuse métallique qui comprend un fond et une paroi latérale s'élevant à partir du fond et présente au moins une zone fragile, ladite calotte présentant une face intérieure concave adaptée à recevoir des aliments et une face extérieure convexe, ladite face intérieure, de préférence sablée , grenaillée ou brossée, étant revêtue successivement, à partir de la calotte, d'une base dure et d'un revêtement antiadhésif recouvrant ladite base dure, le revêtement antiadhésif comportant au moins une couche comprenant au moins une résine fluorocarbonée, seule ou en mélange avec au moins une résine d'accrochage thermostable résistant à au moins 200°C, cette (ces) résine(s) formant un réseau continu fritté,
caractérisé en ce que la base dure (3) se présente comme une couche qui est au moins discontinue à l'endroit de la zone fragile (23),
et en ce que ladite base dure est en un matériau céramique et/ou métallique et/ou polymère, qui se présente sous forme d'une dispersion superficielle de gouttes du dit matériau réparties de manière sensiblement homogène sur ladite face intérieure (24) à l'endroit de la zone fragile (23) avec :
- un taux de recouvrement qui est compris entre 30% et 80% de la surface à recouvrir, et
- une taille de gouttes comprise entre 2 µm et 50 µm.
de sorte que la densité surfacique des gouttes est comprise entre 300 et 2000 gouttes/mm².

Par taux de recouvrement, on entend au sens de la présente invention le rapport, exprimé en pourcentage, de la partie de la surface à recouvrir du support qui est effectivement couverte par la dispersion superficielle de gouttes de matériau, sur la surface à recouvrir par la base dure discontinue.

Par dispersion superficielle de gouttes de matériau céramique et/ou métallique et/ou polymère, on entend au sens de la présente invention, une couche céramique et/ou métallique et/ou polymère discontinue se présentant à l'état divisé sur un support (en l'occurrence celui de l'article culinaire), de sorte que la rugosité de cette couche est créée par les gouttes d'émail dispersées.

La présence d'une telle base dure permet de rendre le revêtement antiadhésif plus résistant à la rayure et à l'abrasion tout en permettant les opérations de mise en oeuvre. Avec un taux de recouvrement qui est compris entre 30% et 80% de la surface à recouvrir, on observe un bon accrochage du revêtement antiadhésif et on minimise ainsi le temps de mise en oeuvre.

La calotte creuse métallique est avantageusement un support monocouche en aluminium, alliage d'aluminium, en fonte d'aluminium (ou alliage d'alliage d'aluminium de fonderie, en acier inoxydable, ou en fonte d'acier.

Mais il est également avantageux dans le cadre de la présente invention d'utiliser une calotte creuse constituée d'un support multicouche comprenant de l'extérieur vers l'intérieur les couches suivantes acier inoxydable ferritique/aluminium/acier inoxydable austénitique ou encore acier inoxydable/ aluminium/cuivre/aluminium/acier inoxydable austénitique ou encore une calotte d'aluminium de fonderie, d'aluminium ou d'alliages d'aluminium doublée d'un fond extérieur en acier inoxydable.

A titre d'alliages d'aluminium susceptibles d'être utilisés pour réaliser la calotte de l'article culinaire 1, selon l'invention on conseille les alliages d'aluminium émaillables faiblement alliés, et en particulier :
- les aluminiums « purs » à 99% d'aluminium de la série 1000, et par exemple les alliages 1050, 1100, 1200 et 1350,
- les alliages d'aluminium et de manganèse de la série 3000, et par exemple les alliages 3003, 3004, 3105 et 3005,
- les alliages d'aluminium et de silicium de la série 4000, et par exemple les alliages,
- les alliages d'aluminium et de magnésium de la série 5000, et par exemple les alliages 5005, 5050 et 5052, et
- les alliages d'aluminium, silicium et magnésium de la série 6000, et par exemple les alliages 6053, 6060, 6063, 6101 et 6951, et
- les alliages d'aluminium, fer, silicium de la série 8000, et par exemple l'alliage 8128.

A titre d'alliages d'aluminium de fonderie susceptibles d'être utilisés pour réaliser le support 2 (en l'occurrence une calotte) de l'article culinaire 1, on conseille les alliages aluminium-silicium AS, et de préférence les alliages aluminium-silicium de type AS7 à AS12, c'est-à-dire, les alliages AS contenant de 7 à 12% de silicium conformément à l'ancienne norme française NF AS 02-004.

A titre d'aciers inoxydables, on conseille les aciers inoxydables ferritiques du type et les aciers inoxydables austénitiques du type.

La base dure au moins partiellement discontinue de l'article selon l'invention est réalisée en un matériau céramique et/ou métallique et/ou polymère.

Dans le cas d'une base dure en matériau céramique et/ou métallique, il est préférable que le point de fusion du matériau soit supérieur à celui du métal ou de l'alliage métallique en contact avec la base dure.

Selon une première variante de l'invention, la base dure est une couche au moins partiellement discontinue constituée d'un mélange d'alumine et de dioxyde de titane.

Selon une deuxième variante de l'invention, la base dure est une couche au moins partiellement discontinue en un matériau polymère, de préférence en polyamide-imide (PAI) et/ou en oxy-1,4-phénylène-oxy-1,4 phénylène-carbonyle-1,4-phénylène (PEEK).

Avantageusement, la base dure présente une rugosité de surface Ra comprise entre 2 µm et 12 µm, et de préférence entre 4 et 8 µm.

Par rugosité de surface Ra, on entend, au sens de la présente invention, l'écart moyen arithmétique entre les creux et les pics de la surface par rapport à la ligne médiane (ou moyenne), cet écart étant estimé selon la Norme ISO 4287.

Une rugosité inférieure à 2 µm conduit à une adhérence plus faible du revêtement antiadhésif à la base dure, tandis qu'une rugosité supérieure à 12 µm a pour conséquence que le revêtement antiadhésif n'est plus lisse.

En ce qui concerne maintenant le revêtement antiadhésif, celui-ci contient au moins une résine fluorocarbonée seule ou en mélange avec une résine thermostable et résistante à au moins 200°C, ces résines formant après cuisson un réseau continu fritté.

La résine fluorocarbonée est avantageusement choisie parmi le polytétrafluoroéthylène (PTFE), le copolymère de tétrafluoroéthylène et de perfluoropropylvinyléther (PFA), le copolymère de tétrafluoroéthylène et d'hexafluoropropylène (FEP), et leurs mélanges (en particulier un mélange de PTFE et de PFA).

La (ou les) résine(s) thermostable(s) résistant à au moins 200°C est (sont) avantageusement choisie(s) parmi les polyamides imides (PAI), les polyéthers imides (PEI), les polyimides (PI), les polyéthercétones (PEK), les polyétheréthercétones (PEEK), les polyéthersulfones (PES) et les sulfures de polyphénylène (PPS).

De manière avantageuse, le revêtement antiadhésif comprend successivement, à partir de la base dure, une couche de primaire d'accrochage, et au moins une couche de finition.

La couche de primaire peut également avantageusement comprendre des charges et/ou des pigments.

A titre de charges utilisables dans la composition de primaire de l'article culinaire 1 selon l'invention, on peut notamment citer la silice colloïdale, les paillettes de mica recouverte de TiO₂, l'alumine, le corindon, le carbure de silicium, le quartz et leurs mélanges.

A titre de pigments utilisables dans la composition de primaire de l'article culinaire 1 selon l'invention, on peut notamment citer le noir de carbone, les oxydes de fer, et les oxydes mixtes de cobalt et de manganèse, le bioxyde de titane.

La présente invention a également pour objet un procédé de fabrication d'un article culinaire comprenant les étapes suivantes :
a) une étape de fourniture d'un support métallique sous forme de disque, comprenant deux faces opposées ;
b) une étape de mise en forme du dit support pour lui conférer la forme d'une calotte, qui comprend un fond et une paroi latérale s'élevant à partir du fond et présente au moins une zone fragile, et ainsi définir une face intérieure concave adaptée à recevoir des aliments et une face extérieure convexe ;
c) de manière optionnelle, une étape de traitement de la face intérieure du support, pour obtenir une face intérieure traitée favorisant l'adhérence d'une base dure sur le support ;
d) une étape de réalisation d'une base dure adhérente sur ladite face intérieure du support ;
e) une étape de réalisation d'un revêtement antiadhésif sur ladite base dure formée à l'étape d) ;
ledit procédé étant caractérisé en ce que l'étape d) de réalisation de la base dure comprend une pulvérisation thermique, sur ladite face intérieure d'un matériau céramique et/ou métallique et/ou polymère se présentant sous forme pulvérulente, de manière à former sur ladite face intérieure de la calotte une couche qui est au moins discontinue au niveau de la zone fragile, la partie discontinue se présentant sous forme d'une dispersion superficielle de gouttes réparties de manière sensiblement homogène sur ladite face intérieure au moins à l'endroit de la zone fragile, avec :
- un taux de recouvrement qui est compris entre 30% et 80% de la surface à recouvrir, et
- une taille de gouttes comprise entre 2 µm et 50 µm,
et en ce que l'étape b) de mise en forme du support est réalisée soit avant l'étape d) de réalisation de la base dure, soit après l'étape e) de réalisation du revêtement antiadhésif.

La pulvérisation thermique peut être notamment une pulvérisation à la flamme, ou une pulvérisation plasma, ou encore une pulvérisation par arc-spray, sans que cette liste soit limitative. Toutefois, on utilise de préférence pour des raisons économiques et de facilité de mise en oeuvre une pulvérisation à la flamme.

Le matériau destiné à être pulvérisé à la flamme pour servir de base dure peut avantageusement se présenter sous forme d'une poudre de granulométrie comprise entre 5 et 65 µm. Cette granulométrie permet d'avoir un bon écoulement dans la trémie d'alimentation, limite la poussière lors des manipulations et présente suffisamment peu d'inertie thermique pour pouvoir fondre complètement lors du passage dans la flamme.

De manière avantageuse, l'étape d) de réalisation de la base dure est précédée d'une étape de préchauffage du dit support ou de ladite calotte selon que l'étape b) de mise en forme est réalisée avant la réalisation d) de la base dure ou après la réalisation e) du dit revêtement antiadhésif. Ce préchauffage est adapté à la nature du support et du matériau projeté. Le préchauffage du support évite un refroidissement brutal de la goutte en fusion susceptible d'en limiter l'adhérence.

Le revêtement antiadhésif est formé de la manière suivante sur la base dure : l'étape c) de réalisation du revêtement antiadhésif comprend une étape de dépôt, sur ladite base dure, d'au moins une composition à base de résine fluorocarbonée, puis une étape de frittage, de préférence comprise entre 380°C et 450°C.

D'autres avantages et particularités de la présente invention résulteront de la description qui va suivre, donnée à titre d'exemple non limitatif et faite en référence aux figures annexées :
- la figure 1 représente une vue schématique en coupe d'un article culinaire conforme à l'invention selon une première variante de réalisation,
- la figure 2 représente une vue schématique en coupe d'un article culinaire conforme à l'invention selon une deuxième variante de réalisation, et
- la figure 3 représente une vue schématique en coupe d'un article culinaire conforme à l'invention selon une troisième variante de réalisation.

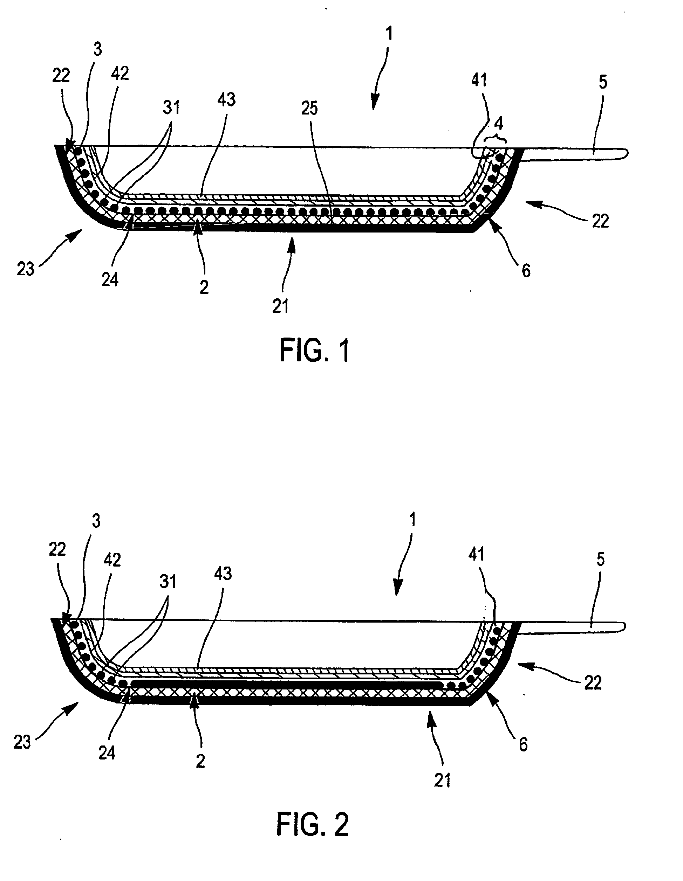

Les éléments identiques représentés sur les figures 1 et 2 sont identifiées par des références numériques identiques.

Sur les figures 1 à 3, on a représenté à titre d'exemple d'article culinaire selon l'invention, une poêle 1 comprenant un support métallique 2 se présentant sous forme de calotte creuse et une poignée de préhension 5. Le support 2 comprend une face intérieure 24 qui est la face orientée du côté des aliments susceptibles d'être reçus dans la poêle 1, et une face extérieure 25 qui est destinée à être disposée vers une source de chaleur extérieure.

La face intérieure 24 est revêtue successivement, à partir du support 2, d'une base dure 3 conforme à la présente invention, et d'un revêtement antiadhésif 4 qui comprend successivement à partir de la base dure 3 une couche de primaire 41 d'accrochage et deux couches de finition 42, 43.

Par ailleurs, les figures 1 à 3 montrent également que la face extérieure 22 du support 2 est avantageusement revêtue par un revêtement de couverture 6 extérieur (par exemple en émail), l'épaisseur de ce revêtement de couverture 6 étant classiquement comprise entre 20 µm et 300 µm.

Dans la variante de réalisation illustrée sur la figure 1, la base dure 3 est entièrement discontinue (sur la totalité de la surface intérieure 24 du support 2) comprenant une dispersion superficielle de gouttes 31 d'un matériau céramique et/ou métallique et/ou polymère (tel que défini précédemment). Ces gouttes sont solidifiées et présentent une taille moyenne entre 2 µm et 50 µm et sont réparties de manière homogène à la surface de la face intérieure 21, avec un taux de revêtement de la face intérieure entre 40 et 80%, avec une densité surfacique comprise entre 300 gouttes/mm² et 2000 gouttes/mm².

Dans cette variante de réalisation, les gouttes du matériau céramique et/ou métallique et/ou polymère 31 dispersées à la surface de la face intérieure 24 sont noyées dans la couche de primaire 41 du revêtement antiadhésif 4, de manière à permettre l'accrochage de la couche de primaire à la base dure 3. Une telle base dure 3 conduit à un renforcement mécanique accru du revêtement antiadhésif 4, notamment en termes de dureté et d'adhérence à la base dure 3 sous-jacente. En effet, les particules de résine fluorocarbonée frittée et les charges de la couche de primaire 41 en pénétrant entre les gouttes du matériau céramique et/ou métallique et/ou polymère 31 solidifiées déposées à la surface de la face intérieure 24, renforcent l'adhérence de la couche de primaire 41 sur la base dure 3. De ce fait, le renforcement mécanique du revêtement antiadhésif 4 est accru à la fois grâce aux charges dans la couche de primaire 41 et la dispersion de gouttes 31 de la base dure 3 qui jouent un rôle analogue à celui d'une charge renforçante dans la zone d'interpénétration des deux couches 3, 41.

Dans la variante de réalisation illustrée sur la figure 2, la base dure 3 est une couche de matériau céramique et/ou métallique et/ou polymère continue au niveau du fond 21 et discontinue au niveau de la zone de jonction 23 entre le fond 21 et les parois latérales 22, et sur les parois latérales 22.

Une telle combinaison peut être avantageusement obtenue en ajustant les temps de pulvérisation selon les zones destinées à être recouvertes d'un dépôt soit continu ou discontinu, c'est-à-dire en ayant un déplacement lent de la torche dans les zones non fragiles (pour former une zone de base dure continue) et un déplacement rapide dans les zones fragiles (pour former une zone de base dure discontinue).

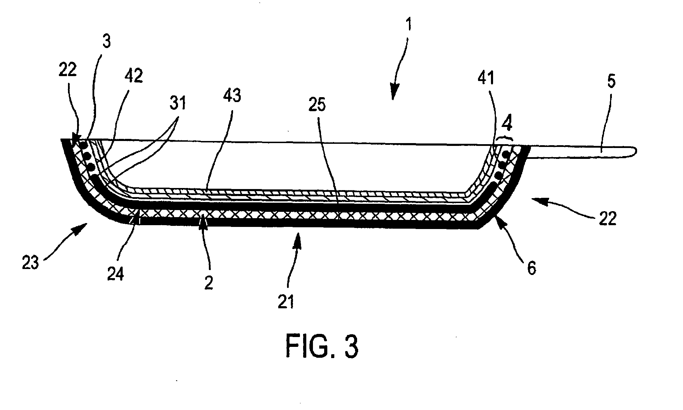

Dans la variante de réalisation illustrée sur la figure 3, la base dure 3 est une couche de matériau céramique et/ou métallique et/ou polymère continue au niveau du fond 21 et au niveau de la zone de jonction 23 entre le fond 21 et les parois latérales 22, et discontinue sur les parois latérales 22.

### EXEMPLES

### Mode opératoire

- Matériel : Torche CASTOLIN DS 8000 buse diametre 30mm
- Distributeur de poudre twin 20 Sulzer-Metco
- Gaz propulseur : argon ou air 4 Nl/min
- Gaz combustible : acétylène 14 Nl/min Oxygène 31 Nl/min
- Température du support lors de l'application de la base dure : égale ou supérieure à la température ambiante (de l'ordre de 20-25°C,) et préférentiellement égale ou supérieure à 200°C pour une poudre céramique
- Temps de pulvérisation : de 0.5 à 20 s pour une poêle de 26 cm de diamètre
- Application du PTFE : par pistolétage (au rouleau ou par sérigraphie)

### Tests

### Evaluation de la résistance à l'abrasion

On évalue la résistance à l'abrasion du revêtement antiadhésif formée en soumettant celui-ci à l'action d'un tampon abrasif de type SCOTCH BRITE (marque déposée) vert.

La résistance à l'abrasion du revêtement est estimée quantitativement par le nombre de passages au tampon nécessaires pour créer la première rayure (correspondant à l'apparition du métal constitutif du support).

L'anti-adhérence est mesurée en fonction du nettoyage plus ou moins facile du lait carbonisé. La cotation est la suivante :
- 100 : signifie que la pellicule de lait carbonisé est éliminée complètement par simple application d'un jet d'eau du robinet de cuisine ;
- 50 : signifie qu'il faut ajouter des mouvements circulaires de l'objet sous le jet d'eau pour décoller complètement la pellicule carbonisée ;
- 25 : signifie qu'il faut laisser tremper pendant 10 minutes et éventuellement forcer le départ en passant une éponge humide pour éliminer complètement la pellicule ;
- 0 : signifie qu'à l'issue du processus précédent, tout ou partie de la pellicule carbonisée reste adhérente.

### Evaluation de l'adhérence

L'adhérence du revêtement antiadhésif sur la base dure est également évaluée. Pour cela, on effectue un test d'adhérence par quadrillage selon la norme ISO 2409, suivi d'une immersion de l'article pendant 9 heures (par 3 cycles de trois heures dans de l'eau bouillante). Puis, on observe si le revêtement antiadhésif présente ou non un décollement.

La cotation est la suivante :
- aucun carré ne doit être décollé pour obtenir une cotation de 100 (adhérence excellente) ;
- en cas de décollement la valeur relevée est égale à 100 diminuée du nombre de carrés décollés.

### Exemple 1 :

### Article culinaire selon l'invention avec une base dure discontinue en céramique

Un disque d'aluminium 3003 de diamètre 330 mm est dégraissé puis brossé pour obtenir une rugosité Ra de 1.5 µm. Ce disque est préchauffé à une température comprise entre 150°C et 200°C.

On applique au moyen de la torche une poudre céramique constituée d'un mélange alumine/dioxyde de titane (à raison de 87% d'alumine et de 13% de dioxyde de titane) pour obtenir un dépôt discontinu sur toute la surface de 1.5 g et de rugosité 4 µm.

Ce disque ainsi préparé est successivement recouvert d'une couche de primaire et d'une couche de finition à base de PTFE.

Après étuvage à 415°C, le disque ainsi préparé est embouti pour donner une calotte avec un fond de diamètre 26cm, intérieurement revêtue de PTFE (revêtement antiadhésif).

Ce revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testé pour sa tenue au lave vaisselle, après 20 cycles de lavage, le revêtement ne présente ni craquelures, ni boursouflures.

On effectue également un test d'abrasion par passages en « aller/retour » d'un tampon abrasif. Après 20000 passages, le revêtement ne présente pas de rayures au métal et son anti-adhérence mesurée par le nettoyage du lait carbonisé est de 50.

### Exemple 2

### Article culinaire selon l'invention avec une base dure discontinue en céramique

Une calotte en aluminium 3003 de diamètre 260 mm est dégraissée et sablée pour obtenir une rugosité Ra de 2 µm. Cette calotte est préchauffée à une température comprise entre 150°C et 200°C.

On applique au moyen de la torche une poudre céramique de type alumine/dioxyde de titane (87%/13% respectivement) pour obtenir un dépôt discontinu de 0.9 g et de rugosité Ra 3.5 µm.

Après refroidissement cette calotte ainsi préparée est successivement recouverte d'une couche de primaire et d'une couche de finition à base de PTFE.

Le revêtement est fritté à une température de 415°C pendant 7 minutes.

Après refroidissement, le revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testé pour sa tenue au lave vaisselle : après 20 cycles de lavage, le revêtement ne présente ni craquelures ni boursouflures.

Ce type de calotte est également soumis au même test d'abrasion qu'à l'exemple 1. Apres 20000 passages, le revêtement ne présente pas de rayures au métal et son anti-adhérence mesurée par le nettoyage du lait carbonisé est de 100.

### Exemple 3

### Article culinaire multicouches selon l'invention avec une base dure discontinue en céramique

Une calotte de diamètre 260 mm et multicouche, associant une feuille extérieure en acier ferritique d'épaisseur 0.5 mm, une feuille intermédiaire en aluminium 3003 d'épaisseur 2mm et une feuille extérieure en inox austénitique d'épaisseur 0.5 mm, est dégraissée et microsablée (au niveau de la feuille intérieure) pour obtenir une rugosité Ra de 1.3 µm. Cette calotte est préchauffée à une température comprise entre 150°C et 200°C.

On applique au moyen de la torche une poudre céramique de type alumine/dioxyde de titane (87%/13% respectivement) pour obtenir un dépôt discontinu de 1.2 g et de rugosité Ra de 3 µm.

Après refroidissement, cette calotte ainsi préparée est successivement recouverte d'une couche de primaire et d'une couche de finition à base de PTFE. Le revêtement est fritté à une température de 415°C pendant 7 minutes, puis refroidi.

Apres refroidissement, le revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testée pour sa tenue au lave vaisselle : après 20 cycles de lavage, le revêtement ne présente ni craquelures ni boursouflures.

Ce type de calotte est également soumis au même test d'abrasion qu'aux exemples 1 et 2. Après 20000 passages, le revêtement ne présente pas de rayures au métal et son anti-adhérence mesurée par le nettoyage du lait carbonisé est de 100.

### Exemple 4

### Article culinaire multicouches témoin avec une base dure discontinue en émail

Une calotte « témoin » de diamètre 260 mm et multicouche, associant une feuille extérieure en acier ferritique d'épaisseur 0,5 mm, une feuille intermédiaire en aluminium 3003 d'épaisseur 2 mm et une feuille extérieure en inox austénitique d'épaisseur 0,5 mm, est dégraissée et microsablée pour obtenir une rugosité Ra de 1,3 µm. On applique à température ambiante par pistolétage une barbotine d'émail pour acier de point de ramollissement 720°C de manière à obtenir un dépôt discontinu de 1.2 g et de rugosité 3 µm.

Cette calotte est étuvée à 750°C pour obtenir la gélification de l'émail. A cette température, on observe la délamination complète de la calotte multicouche.

### Exemple 5

### Article culinaire témoin avec une base dure continue en céramique

Un disque d'aluminium 3003 de diamètre 330 mm est dégraissé puis brossé pour obtenir une rugosité de 1.5 pm.

On applique au moyen d'une torche une céramique de type alumine/dioxyde de titane (87%/13% respectivement) pour obtenir un dépôt continu de 8 g et de rugosité 8 µm sur l'ensemble de la calotte c'est-à-dire sur les zones non fragiles et fragiles.

Ce disque ainsi préparé est successivement recouvert d'une couche de primaire et d'une couche de finition à base de PTFE.

Après étuvage à 415°C, le disque est embouti pour donner une calotte de diamètre 26 cm revêtue intérieurement.

A l'emboutissage, on observe une cassure de la base dure dans les zones de pliage et le revêtement présente de nombreuses craquelures et des pertes d'adhérence.

Après un vieillissement de 3 cycles de 3 heures au contact de l'eau bouillante, l'adhérence, mesurée au moyen d'un quadrillage, est égale à 0%.

### Exemple 6

### Article culinaire selon l'invention avec une base dure discontinue métallique

Une calotte en aluminium 3003 de diamètre 260 mm est dégraissée et sablée pour obtenir une rugosité de surface Ra de 2 µm. Cette calotte est préchauffée à 150°C.

On applique au moyen de la torche une poudre d'alliage d'aluminium 4917 pour obtenir un dépôt discontinu de 1 g et de rugosité 3.5 µm.

Après refroidissement cette calotte ainsi préparée est successivement recouverte d'une couche de primaire et d'une couche de finition à base de PTFE.

Le revêtement est fritté à une température de 415°C pendant 7 minutes.

Après refroidissement, le revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testé pour sa tenue au lave vaisselle : après 20 cycles de lavage, le revêtement ne présente ni craquelures ni boursouflures.

Ce type de calotte est également soumis au même test d'abrasion qu'à l'exemple 1. Apres 20000 passages, le revêtement ne présente pas de rayures au métal et son anti-adhérence mesurée par le nettoyage du lait carbonisé est de 100.

### Exemple 7

### Article culinaire selon l'invention avec une base dure discontinue métallique

Une calotte en aluminium 3003 de diamètre 260 mm est dégraissée et sablée pour obtenir une rugosité de surface Ra de 2 µm. Cette calotte est préchauffée à 200°C.

On applique au moyen de la torche une poudre d'acier inoxydable 304 LHD (granulométrie +150 0.6% ; -45 43% : granulométrie obtenue par tamisage donnant 0.6% de particules supérieures à 150 µm et 43% à moins de 45µm) contenant 11.6% de Ni et 19% de Cr pour obtenir un dépôt discontinu de 1.1 g et de rugosité Ra de 3.2 µm.

Après refroidissement cette calotte ainsi préparée est successivement recouverte d'une couche de primaire et d'une couche de finition à base de PTFE.

Le revêtement est fritté à une température de 415°C pendant 7 minutes.

Après refroidissement, le revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testé pour sa tenue au lave vaisselle : après 20 cycles de lavage, le revêtement ne présente ni craquelures ni boursouflures.

Ce type de calotte est également soumis au même test d'abrasion qu'à l'exemple 1. Apres 20000 passages, le revêtement ne présente pas de rayures au métal et son anti-adhérence mesurée par le nettoyage du lait carbonisé est de 100.

### Exemple 8

### Article culinaire selon l'invention avec une base dure discontinue en polymère

Un disque d'aluminium 3003 de diamètre 330 mm est dégraissé puis brossé pour obtenir une rugosité Ra de 1.5 µm. Ce disque est préchauffé à une température de 150°C.

On applique au moyen de la torche une poudre de PEEK (polyéther-éther cétone) fabriquée et commercialisée par VICTREX sous la dénomination commerciale VICOTE® PEEK™ 709 pour obtenir un dépôt discontinu de 0.8 g et de rugosité 2.7 µm.

Ce disque ainsi préparé est successivement recouvert d'une couche de primaire et d'une couche de finition à base de PTFE.

Après étuvage à 415°C, le disque ainsi préparé est embouti pour donner une calotte avec un fond de diamètre 26cm, intérieurement revêtue de PTFE (revêtement antiadhésif).

Ce revêtement ne présente pas de craquelures, ni de pertes d'adhésion.

Après un vieillissement de 3 cycles de 3 heures au contact de l'eau bouillante, l'adhérence mesurée au moyen d'un quadrillage est égale à 100%.

Ce type de calotte est aussi testé pour sa tenue au lave vaisselle, après 20 cycles de lavage, le revêtement ne présente ni craquelures, ni boursouflures.

On effectue également un test d'abrasion par passages en « aller/retour » d'un tampon abrasif. Apres 15000 passages, le revêtement ne présente pas de rayures au métal et son anti-adhérence mesurée par le nettoyage du lait carbonisé est de 50.

## Revendications

1. Article culinaire (1) comprenant une calotte creuse (2) métallique qui comprend un fond (21) et une paroi latérale (22) s'élevant à partir du fond (21) et présente au moins une zone fragile (23), ladite calotte (2) présentant une face intérieure (24) concave adaptée à recevoir des aliments et une face extérieure (25) convexe, ladite face intérieure (24) étant revêtue successivement, à partir de la calotte (2), d'une base dure (3), et d'un revêtement antiadhésif (4) recouvrant ladite base dure (3) ladite base dure (3) étant au moins partiellement discontinue présentant sous forme d'une dispersion superficielle de gouttes réparties de manière sensiblement homogène sur une partie de la ladite face intérieure (24) avec :
• un taux de recouvrement qui est compris entre 30% et 80% de la surface à recouvrir, et
• une taille de gouttes comprise entre 2 µm et 50 pm, le revêtement antiadhésif (4) comportant au moins une couche (41) comprenant au moins une résine fluorocarbonée, seule ou en mélange avec au moins une résine d'accrochage thermostable résistant à au moins 200°C, cette (ces) résine(s) formant un réseau continu fritté,
**caractérisé en ce que** la base dure (3) se présente comme une couche qui est au moins discontinue à l'endroit de la zone fragile (23),
• et **en ce que** ladite base dure est en un matériau céramique et/ou métallique et/ou polymère.

2. Article culinaire (1) selon la revendication 1, **caractérisé en ce que** le taux de recouvrement de la face intérieure (24) à l'endroit de la zone fragile (23) est compris entre 45% et 55% de la surface à recouvrir.

3. Article culinaire selon la revendication 1 ou 2, **caractérisé en ce que** la base dure est en un matériau céramique et/ou métallique présentant un point de fusion supérieur à celui du métal ou de l'alliage métallique constitutif de la calotte (2).

4. Article culinaire (1) selon la revendication 3, **caractérisé en ce que** la base dure (3) est en un matériau céramique constitué d'un mélange d'alumine et de dioxyde de titane.

5. Article culinaire selon la revendication 1 ou 2, **caractérisé en ce que** la base dure (3) est une couche discontinue en un matériau polymère qui est de préférence le polyamide-imide (PAI) et/ou l'oxy-1,4-phénylène-oxy-1,4 phénylène -carbonyle-1,4- phénylène (PEEK).

6. Article culinaire (1) selon l'une quelconque des revendications précédentes, **caractérisé en ce que** la base dure (3) est discontinue sur l'intégralité de la surface à recouvrir.

7. Article culinaire (1) selon l'une quelconque des revendications précédentes, **caractérisé en ce que** la base dure (3) présente une rugosité de surface Ra comprise entre 2 µm et 12 µm.

8. Article culinaire (1) selon la revendication 7, **caractérisé en ce que** la base dure(3) présente une rugosité de surface Ra comprise entre 4 et 8 µm.

9. Article culinaire (1) selon l'une quelconque des revendications précédentes, **caractérisé en ce que** la résine fluorocarbonée est choisie parmi le polytétrafluoroéthylène (PTFE), le copolymère de tétrafluoroéthylène et de perfluoro-propylvinyléther (PFA), le copolymère de tétrafluoroéthylène et d'hexafluoropropylène (FEP) et leurs mélanges.

10. Article culinaire (1) selon l'une quelconque des revendications précédentes, **caractérisé en ce que** la résine d'accrochage est choisie parmi les polyamides imides (PAI), les polyéthers imides (PEI), les polyimides (PI), les polyéthercétones (PEK), les polyétheréthercétones (PEEK), les polyéthersulfones (PES) et les sulfures de polyphénylène (PPS).

11. Article culinaire (1) selon l'une quelconque des revendications précédentes, **caractérisé en ce que** le revêtement antiadhésif (4) comprend une couche de primaire d'accrochage (41) et au moins une couche de finition (42, 43), lesdites couches de primaire (41) et de finition (42, 43) comportant, outre le réseau continu fritté de résine fluorocarbonée et, le cas échéant, de résine d'accrochage, des charges minérales et/ou organiques et/ou des pigments.

12. Article culinaire (1) selon l'une quelconque des revendications précédentes, **caractérisé en ce que** la calotte (2) est un support monocouche en aluminium ou en alliage d'aluminium, en fonte d'aluminium, en acier inoxydable, en fonte d'acier ou en cuivre, ou un support multicouches comprenant de l'extérieur vers l'intérieur les couches suivantes acier inoxydable ferritique/aluminium/acier inoxydable austénitique ou encore acier inoxydable/aluminium/cuivre/aluminium/acier inoxydable austénitique, ou encore une calotte d'aluminium de fonderie, d'aluminium ou d'alliages d'aluminium doublée d'un fond extérieur en acier inoxydable.

13. Procédé de fabrication d'un article culinaire (1), **caractérisé en ce qu'**il comprend les étapes suivantes :
a) une étape de fourniture d'un support (2) métallique sous forme de disque, comprenant deux faces opposées ;
b) une étape de mise en forme du dit support (2) pour lui conférer la forme d'une calotte (2), qui comprend un fond (21) et une paroi latérale (22) s'élevant à partir du fond (21) et présente au moins une zone fragile (23), et ainsi définir une face intérieure (24) concave adaptée à recevoir des aliments et une face extérieure (25) convexe ;
c) de manière optionnelle, une étape de traitement de la face intérieure (21) du support (3), pour obtenir une face intérieure (24) traitée favorisant l'adhérence d'une base dure (3) sur le support (2) ;
d) une étape de réalisation d'une base dure (3) adhérente sur ladite face intérieure (21) du support (2) et qui est au moins partiellement discontinue, la partie discontinue se présentant sous forme d'une dispersion superficielle de gouttes réparties de manière sensiblement homogène sur ladite face intérieure (24) au moins à l'endroit de la zone fragile (23), avec :
• un taux de recouvrement qui est compris entre 30% et 80% de la surface à recouvrir, et
• une taille de gouttes comprise entre 2 µm et 50 µm;
e) une étape de réalisation d'un revêtement antiadhésif (4) sur ladite base dure (3) formée à l'étape d) ;
• ledit procédé étant **caractérisé en ce que** l'étape d) de réalisation de la base dure (3) comprend la pulvérisation à la flamme, sur ladite face intérieure (24) d'un matériau céramique et/ou métallique et/ou polymère se présentant sous forme pulvérulente, de manière à former sur ladite face intérieure (24) de la calotte (2) une couche (3) qui est au moins discontinue au niveau de la zone fragile (23) ;
et **en ce que** l'étape b) de mise en forme du support (2) est réalisée soit avant l'étape d) de réalisation de la base dure (3), soit après l'étape e) de réalisation du revêtement antiadhésif (4).

14. Procédé selon la revendication 13, **caractérisé en ce que** le matériau destiné à être pulvérisé à la flamme est un matériau pulvérulent avec une granulométrie de 5 µm à 65 µm, et de préférence de 20 à 45 µm.

15. Procédé selon la revendication 14, **caractérisé en ce que** l'étape d) de réalisation de la base dure (3) est précédée d'une étape de préchauffage du dit support (2) ou de ladite calotte (2), selon que l'étape b) de mise en forme est réalisée avant la réalisation d) de la base dure (3) ou après la réalisation e) du dit revêtement antiadhésif (4).

16. Procédé selon la revendication 14 ou 15, **caractérisé en ce que** l'étape c) de réalisation du revêtement antiadhésif (4) comprend une étape de dépôt, sur ladite base dure (3), d'au moins une composition comprend une résine fluorocarbonée, puis une étape de frittage.

17. Procédé selon la revendication 16, **caractérisé en ce que** l'étape de frittage est réalisée dans un four à une température comprise entre 380°C et 450°C.

## Patentansprüche

1. Kochutensil (1), umfassend eine hohle metallische Haube (2), umfassend einen Boden (21) und eine Seitenwand (22), die vom Boden (21) emporragt und mindestens eine fragile Zone (23) aufweist, wobei die Haube (2) eine konkave Innenseite (24), die dazu vorgesehen ist, Nahrungsmittel aufzunehmen, und eine konvexe Außenseite (25) aufweist, wobei die Innenseite (24) ausgehend von der Haube (2) nacheinander mit einem harten Boden (3) und einer Antihaftbeschichtung (4), die auf den harten Boden (3) aufgebracht ist, versehen ist, wobei der harte Boden (3) zumindest teilweise nicht durchgehend ist und in Form einer Oberflächenstreuung von Tropfen, die im Wesentlichen homogen auf einem Teil der Innenseite (24) verteilt sind, vorhanden ist, mit
• einer Abdeckungsrate, die zwischen 30 % und 80 % der abzudeckenden Fläche beträgt, und
• einer Tropfengröße zwischen 2 µm und 50 µm, wobei die Antihaftbeschichtung (4) mindestens eine Schicht (41) aufweist, umfassend mindestens ein Fluorkohlenstoffharz alleine oder in Mischung mit mindestens einem hitzebeständigen Befestigungsharz, das mindestens 200 °C standhält, wobei diese(s) Harz(e) ein durchgehendes gesintertes Netz bildet(n),
**dadurch gekennzeichnet, dass** der harte Boden (3) als eine Schicht vorhanden ist, die zumindest an der Stelle der fragilen Zone (23) nicht durchgehend ist,
und dass der harte Boden aus einem Keramik- und/oder Metall- und/oder Polymermaterial besteht.

2. Kochutensil (1) nach Anspruch 1, **dadurch gekennzeichnet, dass** die Abdeckungsrate der Innenseite (24) an der Stelle der fragilen Zone (23) zwischen 45 % und 55 % der abzudeckenden Oberfläche beträgt.

3. Kochutensil nach Anspruch 1 oder 2, **dadurch gekennzeichnet, dass** der harte Boden aus einem Keramik- und/oder Metallmaterial ist, das einen Schmelzpunkt über jenem des Metalls oder der Metalllegierung, aus dem(der) die Haube (2) besteht, aufweist.

4. Kochutensil (1) nach Anspruch 3, **dadurch gekennzeichnet, dass** der harte Boden (3) aus einem Keramikmaterial ist, das aus einer Mischung von Aluminiumoxid und Titandioxid besteht.

5. Kochutensil nach Anspruch 1 oder 2, **dadurch gekennzeichnet, dass** der harte Boden (3) eine nicht durchgehende Schicht aus einem Polymermaterial ist, das vorzugsweise Polyamid-Imid (PAI) und/oder Oxy-1,4-phenylen-oxy-1,4-phenylencarbonyl-1,4-phenylen (PEEK) ist.

6. Kochutensil (1) nach einem der vorhergehenden Ansprüche, **dadurch gekennzeichnet, dass** der harte Boden (3) auf der gesamten abzudeckenden Oberfläche nicht durchgehend ist.

7. Kochutensil (1) nach einem der vorhergehenden Ansprüche, **dadurch gekennzeichnet, dass** der harte Boden (3) eine Oberflächenrauigkeit Ra zwischen 2 µm und 12 µm aufweist.

8. Kochutensil (1) nach Anspruch 7, **dadurch gekennzeichnet, dass** der harte Boden (3) eine Oberflächenrauigkeit Ra zwischen 4 und 8 µm aufweist.

9. Kochutensil (1) nach einem der vorhergehenden Ansprüche, **dadurch gekennzeichnet, dass** das Fluorkohlenstoffharz unter Polytetrafluorethylen (PTFE), dem Copolymer von Tetrafluorethylen- und Perfluorpropylvinylether (PFA), dem Copolymer von Tetrafluorethylen und Hexafluorpropylen (FEP) und ihren Mischungen ausgewählt ist.

10. Kochutensil (1) nach einem der vorhergehenden Ansprüche, **dadurch gekennzeichnet, dass** das Befestigungsharz unter den Polyamid-Imiden (PAI), den Polyether-Imiden (PEI), den Polyimiden (PI), den Polyetherketonen (PEK), den Polyetheretherketonen (PEEK), den Polyethersulfonen (PES) und den Polyphenylensulfiden (PPS) ausgewählt ist.

11. Kochutensil (1) nach einem der vorhergehenden Ansprüche, **dadurch gekennzeichnet, dass** die Antihaftbeschichtung (4) eine primäre Haftschicht (41) und mindestens eine Endschicht (42, 43) umfasst, wobei die primäre Schicht (41) und die Endschicht (42, 43) außer dem durchgehenden gesinterten Netz aus Fluorkohlenstoffharz und, gegebenenfalls, Befestigungsharz mineralische und/oder organische Füllstoffe und/oder Pigmente umfassen.

12. Kochutensil (1) nach einem der vorhergehenden Ansprüche, **dadurch gekennzeichnet, dass** die Haube (2) eine einschichtige Stütze aus Aluminium oder aus Aluminiumlegierung, aus Aluminiumguss, aus rostfreiem Stahl, aus Stahl- oder Kupferguss oder eine mehrschichtige Stütze ist, umfassend von außen nach innen die folgenden Schichten: rostfreier Ferritstahl/Aluminium/rostfreier Austenitstahl oder auch rostfreier Stahl/Aluminium/Kupfer/Aluminium/rostfreier Austenitstahl oder auch eine Haube aus Schmelzaluminium, Aluminium oder Aluminiumlegierungen, gedoppelt mit einem äußeren Boden aus rostfreiem Stahl.

13. Verfahren zur Herstellung eines Kochutensils (1), **dadurch gekennzeichnet, dass** es die folgenden Schritte umfasst:
a) einen Schritt der Bereitstellung einer metallischen Stütze (2) in Form einer Scheibe, umfassend zwei gegenüberliegende Seiten;
b) einen Schritt des Formens der Stütze (2), um ihr die Form einer Haube (2) zu verleihen, umfassend einen Boden (21) und eine Seitenwand (22), die vom Boden (21) emporragt und mindestens eine fragile Zone (23) aufweist, und um auf diese Weise eine konkave Innenseite (24), die geeignet ist, Nahrungsmittel aufzunehmen, und eine konvexe Außenseite (25) zu definieren;
c) optional einen Schritt der Bearbeitung der Innenseite (21) der Stütze (3), um eine bearbeitete Innenseite (24) zu erhalten, die die Haftung eines harten Bodens (3) auf der Stütze (2) begünstigt;
d) einen Schritt der Herstellung eines harten Bodens (3), der auf der Innenseite (21) der Stütze (2) haftet und zumindest teilweise nicht durchgehend ist, wobei der nicht durchgehende Teil in Form einer Oberflächenstreuung von Tropfen vorhanden ist, die im Wesentlichen homogen auf der Innenseite (24) zumindest an der Stelle der fragilen Zone (23) verteilt sind, mit:
• einer Abdeckungsrate, die zwischen 30 % und 80 % der abzudeckenden Fläche beträgt, und
• einer Tropfengröße zwischen 2 µm und 50 µm;
e) einen Schritt der Herstellung einer Antihaftbeschichtung (4) auf dem harten Boden (3), der in Schritt d) gebildet wurde;
wobei das Verfahren **dadurch gekennzeichnet ist, dass** der Schritt d) der Herstellung des harten Bodens (3) die Flammenzerstäubung eines Keramik- und/oder Metall- und/oder Polymermaterials, das in pulverförmiger Form vorhanden ist, auf der Innenseite (24) umfasst, um auf der Innenseite (24) der Haube (2) eine Schicht (3) zu bilden, die zumindest im Bereich der fragilen Zone (23) nicht durchgehend ist;
und dass der Schritt b) des Formens der Stütze (2) entweder vor dem Schritt d) der Herstellung des harten Bodens (3) oder nach dem Schritt e) der Herstellung der Antihaftbeschichtung (4) erfolgt.

14. Verfahren nach Anspruch 13, **dadurch gekennzeichnet, dass** das Material, das dazu bestimmt ist, flammenzerstäubt zu werden, ein pulverförmiges Material mit einer Körnchengröße von 5 µm bis 65 µm und vorzugsweise von 20 bis 45 µm ist.

15. Verfahren nach Anspruch 14, **dadurch gekennzeichnet, dass** vor dem Schritt d) der Herstellung des harten Bodens (3) ein Schritt der Vorerhitzung der Stütze (2) oder der Haube (2) erfolgt, je nachdem ob der Schritt b) des Formens vor der Herstellung d) des harten Bodens (3) oder nach der Herstellung e) der Antihaftbeschichtung (4) erfolgt.

16. Verfahren nach Anspruch 14 oder 15, **dadurch gekennzeichnet, dass** der Schritt c) der Herstellung der Antihaftbeschichtung (4) einen Schritt des Aufbringens mindestens einer Zusammensetzung, umfassend ein Fluorkohlenstoffharz, auf den harten Boden (3) und dann einen Schritt des Sinterns umfasst.

17. Verfahren nach Anspruch 16, **dadurch gekennzeichnet, dass** der Schritt des Sinterns in einem Ofen bei einer Temperatur zwischen 380 °C und 450 °C erfolgt.

## Claims

1. Cooking utensil (1) comprising a hollow metal shell (2) which comprises a bottom (21) and a side wall (22) rising from the bottom (21) and exhibits at least one brittle region (23), the said shell (2) exhibiting a concave internal face (24) suitable for receiving foods and a convex external face (25), the said internal face (24) being successively coated, from the shell (2), with a hard base (3) and with a non-stick coating (4) covering the said hard base (3), the said hard base (3) being at least partially non-continuous and existing in the form of a surface dispersion of drops distributed substantially homogeneously over a portion of the said internal face (24) with:
• a degree of covering which is between 30% and 80% of the surface to be covered, and
• a drop size of between 2 µm and 50 µm, the non-stick coating (4) comprising at least one layer (41) comprising at least one fluorocarbon resin, alone or as a mixture with at least one thermally stable bonding resin which is resistant to at least 200°C, this (these) resin(s) forming a continuous sintered network,
**characterized in that** the hard base (3) exists as a layer which is at least non-continuous at the point of the brittle region (23),
and **in that** the said hard base is made of a ceramic and/or metal and/or polymer material.

2. Cooking utensil (1) according to Claim 1, **characterized in that** the degree of covering of the internal face (24) at the point of the brittle region (23) is comprised between 45% and 55% of the surface to be covered.

3. Cooking utensil according to Claim 1 or 2, **characterized in that** the hard base is made of a ceramic and/or metal material exhibiting a melting point greater than that of the constituent metal or metal alloy of the shell (2).

4. Cooking utensil (1) according to Claim 3, **characterized in that** the hard base (3) is made of a ceramic material composed of a mixture of alumina and titanium dioxide.

5. Cooking utensil according to Claim 1 or 2, **characterized in that** the hard base (3) is a non-continuous layer made of a polymer material which is preferably polyamide-imide (PAI) and/or poly(oxy-1,4-phenyleneoxy-1,4-phenylenecarbonyl-1,4-phenylene) (PEEK).

6. Cooking utensil (1) according to any one of the preceding claims, **characterized in that** the hard base (3) is non-continuous over the whole of the surface to be covered.

7. Cooking utensil (1) according to any one of the preceding claims, **characterized in that** the hard base (3) exhibits a surface roughness Ra of between 2 µm and 12 µm.

8. Cooking utensil (1) according to Claim 7, **characterized in that** the hard base (3) exhibits a surface roughness Ra of between 4 and 8 µm.

9. Cooking utensil (1) according to any one of the preceding claims, **characterized in that** the fluorocarbon resin is chosen from polytetrafluoroethylene (PTFE), the copolymer of tetrafluoroethylene and perfluoro(propylvinylether) (PFA), the copolymer of tetrafluoroethylene and hexafluoropropylene (FEP) and their mixtures.

10. Cooking utensil (1) according to any one of the preceding claims, **characterized in that** the bonding resin is chosen from polyamide-imides (PAIs), polyetherimides (PEIs), polyimides (PAs), polyetherketones (PEKs), polyetheretherketones (PEEKs), polyethersulphones (PESs) and polyphenylene sulphides (PPSs).

11. Cooking utensil (1) according to any one of the preceding claims, **characterized in that** the non-stick coating (4) comprises a bonding primary layer (41) and at least one finishing layer (42, 43), the said primary layer (41) and finishing layers (42, 43) comprising, in addition to the continuous sintered network of fluorocarbon resin and, if appropriate, of bonding resin inorganic and/or organic, fillers and/or pigments.

12. Cooking utensil (1) according to any one of the preceding claims, **characterized in that** the shell (2) is a monolayer support made of aluminium or of aluminium alloy, of cast aluminium, of stainless steel, of cast steel or of copper, or a multilayer support comprising, from the outside towards the inside, the following layers: ferritic stainless steel/aluminium/austenitic stainless steel or also stainless steel/aluminium/copper/aluminium/austenitic stainless steel, or also a shell of cast aluminium, of aluminium or of aluminium alloys which is lined with an external bottom made of stainless steel.

13. Process for the manufacture of a cooking utensil (1), **characterized in that** it comprises the following steps:
a) a step of providing a metal support (2) in the disc form, comprising two opposing faces;
b) a step of shaping the said support (2) in order to confer on it the shape of a shell (2), which comprises a bottom (21) and a side wall (22) rising from the bottom (21) and exhibits at least one brittle region (23), and thus defining a concave internal face (24) capable of receiving foods and a convex external face (25);
c) optionally, a step of treatment of the internal face (21) of the support (3), in order to obtain a treated internal face (24) which promotes the adhesion of a hard base (3) to the support (2);
d) a step of producing an adherent hard base (3) on the said internal face (21) of the support (2) which is at least partially non-continuous, the non-continuous part existing in the form of a surface dispersion of drops distributed substantially homogeneously over the said internal face (24), at least at the point of the brittle region (23), with:
• a degree of covering which is between 30% and 80% of the surface to be covered, and
• a drop size of between 2 µm and 50 µm;
e) a step of producing a non-stick coating (4) on the said hard base (3) formed in step d);
the said process being **characterized in that** step d) of producing the hard base (3) comprises the flame spraying, on the said internal face (24), of a ceramic and/or metal and/or polymer material existing in the pulverulent form, so as to form, on the said internal face (24) of the shell (2), a layer (3) which is at least non-continuous at the brittle region (23);
and **in that** step b) of shaping the support (2) is carried out either before step d) of producing the hard base (3) or after step e) of producing the non-stick coating (4).

14. Process according to Claim 13, **characterized in that** the material intended to be flame sprayed is a pulverulent material with a particle size of 5 µm to 65 µm and preferably of 20 to 45 µm.

15. Process according to Claim 14, **characterized in that** step d) of producing the hard base (3) is preceded by a step of preheating the said support (2) or the said shell (2), according to which the shaping step b) is carried out before producing d) the hard base (3) or after producing e) the said non-stick coating (4).

16. Process according to Claim 14 or 15, **characterized in that** step c) of producing the non-stick coating (4) comprises a step of deposition, on the said hard base (3), of at least one composition comprising a fluorocarbon resin, and then a sintering step.

17. Process according to Claim 16, **characterized in that** the sintering step is carried out in an oven at a temperature of between 380°C and 450°C.
